# EUROPÄISCHE PATENTSCHRIFT

(11) **EP 2 651 751 B1**
(45) Veröffentlichungstag und Bekanntmachung des Hinweises auf die Patenterteilung: **03.02.2016**
(21) Anmeldenummer: 11801586.6
(22) Anmeldetag: 22.11.2011
(51) Int. Cl.: B62D 29/04, B29C 70/52

(54) **KAROSSERIEMODULBAUTEIL UND VERFAHREN ZU DESSEN HERSTELLUNG**
BODY MODULE COMPONENT, AND METHOD FOR THE PRODUCTION THEREOF
ÉLÉMENT MODULAIRE DE CARROSSERIE ET SON PROCÉDÉ DE FABRICATION

(30) Priorität: 17.12.2010 DE 102010054935
(43) Veröffentlichungstag der Anmeldung: 23.10.2013
(73) Patentinhaber: Daimler AG, 70327 Stuttgart (DE)
(72) Erfinder: GOETTKER, Stephan, 70192 Stuttgart (DE); KRÜGER, Jan, 70182 Stuttgart (DE); SALKIC, Asmir, 89077 Ulm (DE); SRETENOVIC, Mirko, 70178 Stuttgart (DE)
(74) Vertreter: JENSEN & SON
(86) Internationale Anmeldenummer: PCT/EP2011/005873
(87) Internationale Veröffentlichungsnummer: WO 2012/079693

(56) Entgegenhaltungen:
- WO-A1-2007/056840
- US-A1- 2002 014 302
- US-A1- 2008 284 131

## Beschreibung

Die Erfindung betrifft ein Karosseriemodulbauteil sowie ein Verfahren zu dessen Herstellung.

Großflächige Karosseriestrukturen wie etwa Bodenstrukturen aus einem Faser-Kunststoffverbundmaterial werden heute ausgehend von Textilhalbzeugen wie Geweben und Gelegen in vielen Einzelschritten erst zu einer Bauteil-Preform und danach beispielsweise in der RTM-Technik zu einem Bauteil verarbeitet. Solche FVK-Strukturen weisen relativ niedrige Fasergehalte von ca. 45 Vol.-% und dadurch bedingt niedrige E-Module auf. Somit wird der Faser-Kunststoffverbundwerkstoff nicht optimal ausgenutzt, und es ist mit anderen Worten ein wirtschaftliches maximales Leichtbaupotenzial noch nicht erreicht. Zudem ist RTM-Technik nicht für die Stückzahlen über 5000 Einheiten geeignet und damit nur eingeschränkt großserientauglich.

Zudem werden Strukturelemente aus Faserverbund-Kunststoff wie etwa Pultrudate oder Profile zur Bildung eines Kraftfahrzeugstrukturbauteils mit sehr zeitintensiven Fügetechniken, wie etwa dem Kleben und Verschrauben zusammengefügt. Dadurch werden zusätzliches Bauteilgewicht und - kosten erzeugt. Zudem ist es sehr schwierig, die FVK-Strukturelemente maßhaltig zu fügen.

Die DE 10 2008 020 527 A1 beschreibt eine Rahmenstruktur für den Unterboden einer selbsttragenden Kraftfahrzeugkarosserie mit geringem Gewicht. Auf diese Rahmenstruktur werden vordere und hintere Bodenelemente aus faserverstärktem Kunststoffmaterial geklebt, deren Faseranteil zwischen 20 und 40 Gew.-% beträgt. Ferner sind dort Knoten zur Verbindung einzelner Rahmenelemente vorgesehen, die aus einem Aluminiumdruckguss hergestellt sein können.

Ebenfalls eine Rahmenkonstruktion aus rohrförmigen Rahmenelementen für Kraftfahrzeuge ist in der DE 195 06 160 B4 offenbart, die zur Gewichtsreduktion stranggepresste Aluminium-Rohr-Profile, die über Aluminiumknoten gefügt sind anstelle einer Stahlkonstruktion vorschlägt. Die Rahmenkonstruktion dort besteht aus einzelnen Rahmenmodulen, bei denen es sich um Unterkonstruktionen wie Front-, Heckrahmen, Rahmen-Fahrgastzelle, Rahmen-Fahrgestell und Dachrahmen handeln kann. Eine Unterkonstruktion, der Frontrahmen, wird mit Bauelementen wie Kühler, Lüfter, Windfang, Scheinwerfer oder Stoßfänger zu einem Frontmodul vorgefertigt und kann anschließend präzise an den übrigen (ebenfalls vorgefertigten) Kraftfahrzeugrahmen direkt oder über Knotenelemente angeschlossen werden.

In der WO 2007'056 840 A1 ist ein Fahrzeug beschrieben, das ein Dach mit mindestens einem Dachabschnitt aufweist. Der Dachabschnitt ist hauptsächlich aus einer inneren und einer äußeren faserverstärkten Platte gebildet, die dazwischen ein Kernmaterial mit Harzmaterial enthalten. Die strukturellen Belastungen in dem Fahrzeug zwischen dem Dachabschnitt und den Seitenwandabschnitten werden über Klebekonstruktionsverbindungen übertragen..

In der US 2008 284 131 A1 Wird ein Frachtbehälter beschrieben, der durch einen Pultrusions- oder Extrusionsprozess von faserverstärktem Kunststoff erhalten wird, bei dem gleichzeitig die Seiten, der Dach und der Boden hergestellt werden. Nach dem Pultrusions/Extrusionsverfahren können Türen, Fahrwerk, Strukturträger, eine andere Seite und ein Rad-Baugruppe hinzugefügt werden.

Ausgehend von diesem Stand der Technik ergibt sich die Aufgabe, ein Karosseriemodulbauteil in Leichtbauweise aus einem faserverstärkten Kunststoffmaterial kostengünstig herzustellen, so dass ein maximales Leichtbaupotential mit minimierten Herstellungskosten und damit hoher Werkstoffausnutzung verbunden wird.

Diese Aufgabe wird durch ein Karosseriemodulbauteil mit den Merkmalen des Anspruchs 1 gelöst.

Die Aufgabe der Schaffung einer großserientauglichen Herstellung eines solchen Karosseriemodulbauteils wird mit einem Verfahren mit den Merkmalen des Anspruchs 9 gelöst.

Weiterbildungen des Karosseriemodulbauteils und des Verfahrens sind in den jeweiligen Unteransprüchen ausgeführt.

Eine erste Ausführungsform bezieht sich auf ein Karosseriemodulbauteil, das dreidimensional geformt ist und aus zumindest zwei Karosseriemodulsegmenten zusammengesetzt ist. Die Karosseriemodulsegmente sind Abschnitte kontinuierlich pultrudierter Faser-Kunststoffverbund-Pultrudate; dabei weist jedes Pultrudat eine Grundstruktur auf, die aus in Bezug auf eine vorgegebene Geometrie des Bauteils kraftflussgerecht abgelegten Endlosfasern besteht. Derartige. Pultrudate sind besonders günstig mit konstruktiv geometrisch einfachen Formen zu fertigen, die durch Ablängen in Abschnitte unterteilt werden können, so dass die Abschnitte dann erfindungsgemäß vorteilhaft zu dem komplexeren Karosseriemodulbauteil zusammengesetzt werden.

Erfindungsgemäß ist nun vorgesehen, dass die Grundstruktur des Bauteils einen oder mehrere Durchlässe aufweist, die in dem fertigen Karosseriemodulsegment als Durchbrüche oder Löcher vorliegen, etwa um ein Verbindungsmittel aufzunehmen, mittels dem die Karosseriemodulsegmente zusammengesetzt werden können oder um der Befestigung an einem anderen Bauteil, etwa mittels einer Schraubverbindung, zu dienen.

Die "konstruktiv geometrisch einfache Form" der Pultrudate bezieht sich dabei auf im Wesentlichen flache oder nur gering gekrümmte Flächensegmente, die durch aneinander Fügen komplexe dreidimensional geformte Karosseriemodulbauteile schaffen.

Die kraftflussgerecht abgelegten Fasern der Basisfasernstruktur sind daher um diesen vorgesehenen Durchlass herumgelegt, und es ist eine Stabilisierungsstruktur aus Fasern vorgesehen, die um den oder die Durchlässe angeordnet ist. So kann vorteilhaft ein endlosfaserverstärktes Karosseriemodulsegment mit Löchern und Durchbrüchen bereitgestellt werden, bei denen der Kraftfluss durch die Endlosfasern nicht durch Bohrungen, die Fasern zerstören, unterbrochen ist.

Die erfindungsgemäß um den Durchlass angeordnete Stabilisierungsstruktur erhält einerseits die mechanischen Eigenschaften des Segments, die durch die kraftflussgerecht abgelegte Endlosfaser erreicht wurden, andererseits wird zusätzlich der Lochbereich verstärkt, der beispielsweise als Verbindungsstelle zu einem anderen Segment erhöhter Krafteinleitung eingesetzt ist. So kann vorteilhaft eine maximale Materialausnutzung erreicht werden, wodurch die Wirtschaftlichkeit der so gestalteten Segmente und die Vielseitigkeit ihrer Nutzung erhöht wird. Das heißt, die günstigen Materialeigenschaften von durch Endlosfasern vorteilhaft verstärkten Kunststoffen können vollständig ausgenutzt werden, da der Vorteil der ununterbrochenen Endlosfaser nicht im Nachhinein durch Zerstörung der Faser aufgehoben wird; in der Folge kann das Segment hinsichtlich seines Gewichts unter minimalen Bauteilkosten optimiert werden.

Die so gestalteten Karosseriemodulsegmente weisen somit mit den Durchlässen Befestigungsmittel auf, mit Hilfe derer sie mittelbar oder unmittelbar miteinander, etwa unter Verwendung eines die Durchlässe durchdringenden Verbindungsmittels zur Bildung des Karosseriemodulbauteils verbunden werden können. So wird ein wirtschaftliches Fügen von Faserverbundkunststoff-Strukturen untereinander bei korrekter Krafteinleitung und Kraftübertragung ermöglicht.

Wenn die Karosseriemodulsegmente zur Bildung des Karosseriemodulbauteils nicht direkt miteinander verbunden werden, können Knotenelemente verwendet werden, über die die Karosseriemodulsegmente gefügt werden. Das Knotenelement weist dann Durchtrittsöffnungen für die Verbindungsmittel auf, die mit den Durchlässen der Karosseriemodulsegmente korrespondieren.

In einer Ausführungsform des Karosseriemodulbauteils können die Karosseriemodulsegmente ein innen liegendes Hohlvolumen aufweisen, so dass an den Verbindungsenden der Segmente Hohlraumabschnitte vorliegen. Das Knotenelement kann sich in einen Hohlraumabschnitt erstrecken und/oder an einer Wandung, Außen- oder Innenwandung der Verbindungsenden der Segmente zur Anlage kommen.

Das Knotenelement kann aus einem Metallmaterial, und zwar im Hinblick auf den Leichtbaugedanken insbesondere einem Leichtmetallmaterial wie einer Aluminium- oder Magnesiumlegierung bestehen. Zur Schaffung des Knotenelements kann aber auch ein Faser-Kunststoffverbundmaterial wie beispielsweise ein pultrudiertes oder gespritztes Faser-Kunststoffverbundmaterial mit insbesondere quasiisotrop angeordneten Fasern verwendet werden. Auch bei Verwendung von Leichmetall-Knotenstrukturen werden die Faserverbundkunststoff-Segmente bei korrekter Krafteinleitung und Kraftübertragung wirtschaftlich gefügt.

Vorzugsweise einfach ist das Knotenelement ein gegossenes Knotenelement, das insbesondere an zumindest einer der Wandungen jedes der zu verbindenden Karosseriemodulsegmente formschlüssig angegossen ist.

Zusätzlich kann in einem Bereich zwischen dem Knotenelement und der Wandung eines der Verbindungsenden eine Kleberaupe vorgesehen sein.

Vorteilhaft wird ein hohes E-Modul der Segmente durch einen Fasergehalt im Bereich von 50 % bis 75 %, bezogen auf das Gesamtvolumen des Faser-Kunststoffverbundmaterials, bevorzugt von 65 % bis 75 %, am meisten bevorzugt von 70 % erreicht, der durch die Pultrusion der Grundstruktur ermöglicht wird.

Bei dem aus den Segmenten hergestellten Karosseriemodulbauteil kann es sich um eine Kraftfahrzeugboden-, Vorbau- oder Heckstruktur handeln.

Durch die beschriebene Bauweise reduziert sich die Anzahl der Werkzeuge und der benötigten Fertigungsschritten signifikant, was auch zur Kostenreduzierung beiträgt. Der FVK-Werkstoff wird besser ausgenutzt und es ist eine sehr hohe Funktionsintegration im Karosseriemodulbauteil möglich. Neben minimierten Kosten und maximalem werkstofflichen Leichtbaupotential sind große Stückzahlen möglich.

So wird mit dem erfindungsgemäßen Verfahren zur Herstellung eines Karosseriemodulbauteils ein einfaches Verbinden von FVK-Strukturen direkt oder mittels eines Knotenelements mit einer möglichst geringen Anzahl von Werkzeugen und Fertigungsschritten ermöglicht.

Das Verfahren zur Herstellung des dreidimensional geformten Karosseriemodulbauteils aus einer Mehrzahl von Karosseriemodulsegmenten umfasst die Schritte des kontinuierlichen Pultrudierens von Faser-Kunststoffverbund-Grundstrukturen zu Pultrudaten und des Ablängens der Pultrudate in die Karosseriemodulsegmente bereitstellende Abschnitte, wobei jedes Pultrudat eine Grundstruktur aufweist, die aus in Bezug auf eine vorgegebene Geometrie des Bauteils kraftflussgerecht abgelegten Endlosfasern besteht. Es wird dabei zumindest ein Durchlass pro Karosseriemodulsegment in der Grundstruktur zur Aufnahme eines Verbindungsmittels geschaffen, um zumindest zwei der Karosseriemodulsegmente zu verbinden. Da das fertige Bauteil einen oder mehrere Durchlässe aufweisen soll, erfolgt das Ablegen der Endlosfasern für die Grundstruktur derart, dass die Fasern um den oder die vorgesehenen Durchlässe herumgelegt sind und somit eine Aussparung begrenzen. Um diesen Durchlass, beziehungsweise um die Aussparung, wird die Stabilisierungsstruktur aus Fasern angeordnet, so dass ein Textilhalbzeug verschnittfrei direkt aus der Faser oder gegebenenfalls aus einem Roving vollautomatisiert bereitgestellt ist. Dann kann das Verbinden der Karosseriemodulsegmente zumindest durch ein die Durchlässe durchdringendes Verbindungsmittel erfolgen.

Diese Faser-Kunststoffverbund-Pultrudate werden in einem kontinuierlichen Pultrusionsprozess hergestellt, der den sehr hohen Fasergehalt von bis zu 70 Vol.-% ermöglicht. Das Verfahren ist somit zur wirtschaftlichen, Großserien geeigneten, automatisierten Fertigung von belastungsgerecht und verschnittfrei gefertigten Segmenten zur Bildung der Karosseriemodulbauteils geeignet. Dazu werden die Karosseriemodulsegmente unter Verwendung von Verbindungsmitteln, die die Durchlässe durchdringen, verbunden.

Die Herstellung des pultrudierten Karosseriemodulsegments umfasst weiter das Imprägnieren der Grundstruktur und der um die Durchlässe angeordneten Stabilisierungsstrukturen mit einem aushärtbaren Kunststoff-Matrixmaterial, das daraufhin aushärten Gelassen wird. Das in den Durchbrüchen vorliegende Matrixmaterial wird entfernt und das Karosseriemodulsegment kann endgefertigt werden.

Alternativ zum direkten Verbinden der Segmente können diese indirekt über ein Knotenelement verbunden werden, das die Ausrichtung der Segmente zueinander unter Toleranzausgleich ermöglicht. Das Verbinden der Karosseriemodulsegmente mit den Knotenelementen wird durch Durchtrittsöffnungen zur Aufnahme der Verbindungsmittel erreicht, die mit den in den Karosseriemodulsegmenten vorliegenden Durchlässen korrespondieren.

Bei diesen Knotenelementen kann es sich um vorab gefertigte Leichtmetall- oder FVK-Knotenelemente handeln, in einer vorteilhaften Ausführungsform kann das Karosseriemodulbauteil gleichzeitig mit dem Knotenelement hergestellt werden, indem das Knotenelement an die Karosseriemodulsegmente gegossen wird, so dass das Knotenelement hergestellt und die Karosseriemodulsegmente verbunden werden.

Das Gießen der Knotenelemente an die Segmente umfasst zunächst das positionsgenaue Einlegen der zu verbindenden Karosseriemodulsegmente in eine Gussform, so dass die jeweiligen Verbindungsenden der Karosseriemodulsegmente an eine Kavität der Gussform angrenzen oder sich in sie hinein erstrecken. Die Kavität weist eine Form zur Ausbildung des Knotenelements auf. Nach Schließen der Gussform wird ein Gussmaterial in die Kavität eingebracht, so dass das Gussmaterial an eine oder mehrere Wandungen der Verbindungsenden angegossen wird. Beim Erstarren des Gussmaterials bildet sich das Knotenelement aus, wobei ein Formschluss zwischen den Wandungen der Verbindungsenden und dem Knotenelement entsteht. Das pultrudierte Karosseriemodulsegment weist zumindest ein innen liegendes Hohlvolumen auf, in das das Gussmaterial zur Bildung des Formschlusses zumindest teilweise eindringen kann.

Als Gussmaterial kann eine Leichtmetaillegierung, insbesondere eine Aluminium- oder Magnesiumlegierung zum Einsatz kommen, oder es kann ein spritzgießfähiges Verstärkungsfaser-Matrixkunststoffgemisch verwendet werden.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem besseren Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1: eine perspektivische Draufsicht auf einen Ausschnitt einer flächigen Grundstruktur mit Stabilisierungsstrukturen,
- Fig. 2: eine perspektivische Draufsicht auf ein aus der Grundstruktur gemäß Fig. 1 gebildetes Faserstrangprofil mit Stabilisierungsstrukturen,
- Fig. 3: eine perspektivische Ansicht eines weiteren Grundstrukturprofils mit Stabilisierungsstrukturen,
- Fig. 4: eine perspektivische Ansicht eines noch weiteren Grundstrukturprofils mit Stabilisierungsstrukturen,
- Fig. 5: eine perspektivische Ansicht auf ein Karosseriemodulbauteil gemäß einer Ausführungsform der Erfindung mit drei Karosseriemodulsegmenten, die über zwei Knotenelemente verbunden sind,
- Fig. 6: eine perspektivische Ansicht auf ein Karosseriemodulbauteil gemäß einer Ausführungsform der Erfindung, bei dem drei Karosseriemodulsegmente mittels eines Knotenelements verbunden sind,
- Fig. 7: eine perspektivische Draufsicht auf den Fügebereich zwischen einem weiteren Karosseriemodulsegment und einem Knotenelement nach einer weiteren Ausführungsform der Erfindung,
- Fig. 8: eine perspektivische Draufsicht auf eine weitere Ausführungsform zweier mittels eines Knotenelements verbundener Karosseriemodulsegmente,
- Fig. 9: eine Seitenschnittansicht auf eine weitere Ausführungsform zweier mittels eines zweiteiligen Knotenetements verbundener Karosseriemodulsegmente.

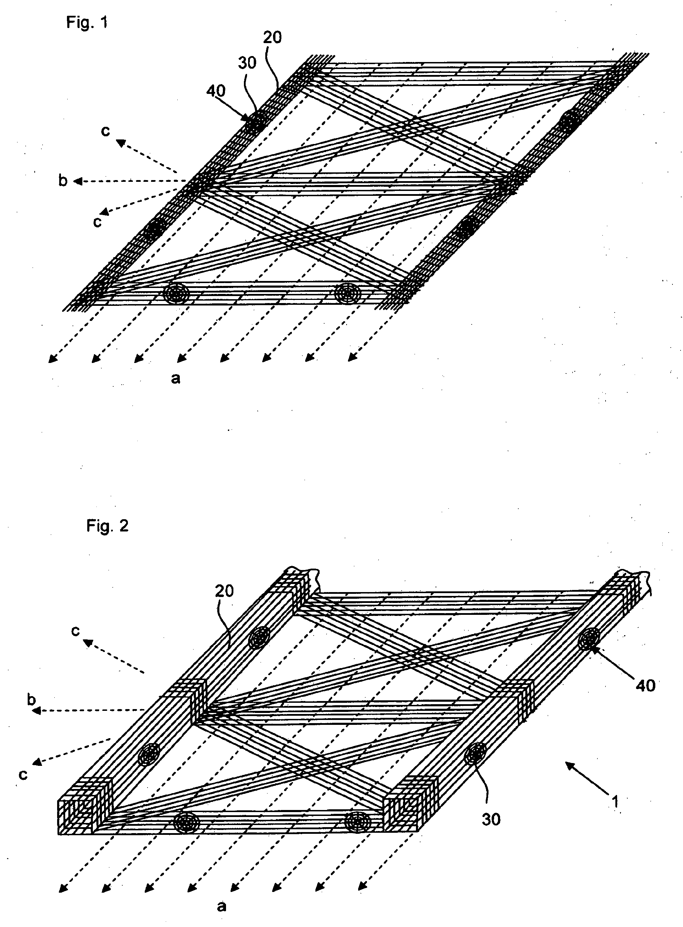

Die vorliegende Erfindung bezieht sich auf ein Karosseriemodulbauteil, das dreidimensional geformt ist und aus zumindest zwei Karosseriemodulsegmenten 1 zusammengesetzt ist. Bei den Karosseriemodulsegmenten 1 handelt es sich um eine belastungsgerecht, verschnittfrei und automatisiert gefertigte Kunststoff-Faserverbund-Preform, die zunächst eine Grundstruktur, wie in den Figuren 1 bis 4 gezeigt, umfasst, bei der die Endlosfasern 20 kraftflussgerecht entsprechend einer vorgegebenen Geometrie des Bauteils abgelegt sind.

Bei der Grundstruktur zur Bildung der Karosseriemodulsegmente 1 kann es sich um ein flächiges Gebilde wie in Figuren 1 und 2 handeln, das kontinuierlich aus den kraftflussgerecht abgelegten Endlosfasern gebildet wird, und auf dem Stabilisierungsstrukturen 40 um jeden der Durchlässe 30 herum aufgebracht werden.

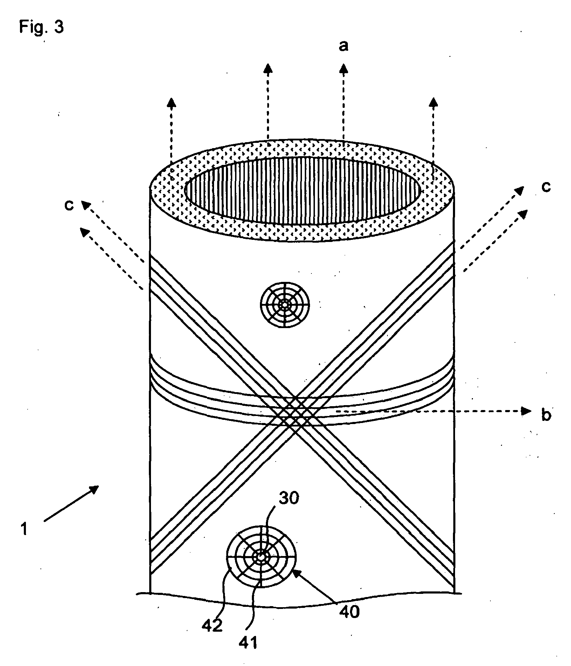

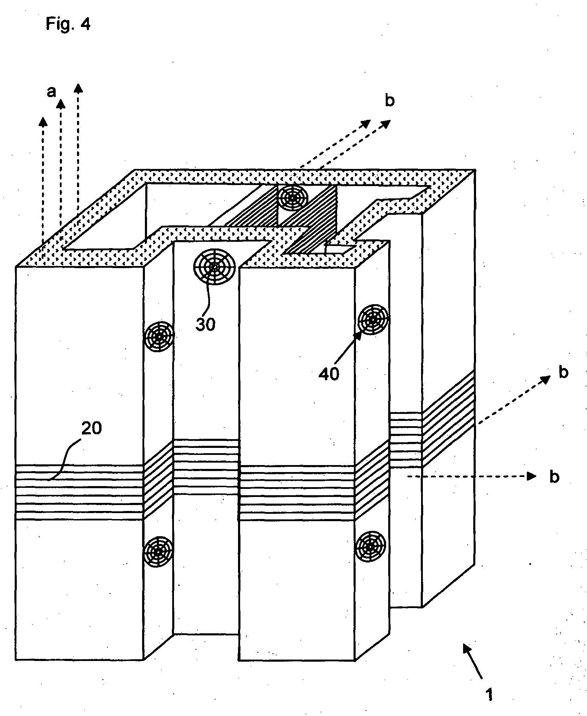

Es kann aber auch vorgesehen sein, dass die Grundstruktur entsprechend einem Bauteilquerschnitt geformt ist, wie beispielsweise in Figuren 3 und 4 gezeigt, und somit ein kontinuierliches Strangpressprofil bildet. Ein solches Strangpressprofil kann auch zur Bildung von Knotenelementen herangezogen werden. Die Stabilisierungsstrukturen 40 können durch Aufnähen von konzentrisch um den Durchlass 30 angeordneten Ringen 42 (vgl. Fig. 4) gebildet werden, oder es kann sich um eine spiralförmig um den Durchlass ausgebildete Stabilisierungsstruktur handeln. Zusätzlich dazu können sich mehrere Abschnitte 41 radial zu dem Durchlass 30 erstrecken. Die Stabilisierungsstruktur kann auch einem Spinnennetz mit radialen und tangentialen Abschnitten ähneln.

So ist es möglich, die tragenden Fasern 20 kraftflussgerecht im Segment 1 zu positionieren und vorgesehene Durchbrüche 30 so zu realisieren, dass es zu keiner Unterbrechung im Kraftfluss der tragenden Fasern 20 kommt. Die kontinuierliche Verarbeitung ermöglicht eine wirtschaftliche und großseriengeeignete Fertigung, die durchgängig automatisiert werden kann. Sie ermöglicht eine belastungsgerechte, verschnittfreie und automatisierungsgerechte Bauteilfertigung.

Bei den Fasern kann es sich um gängige Verstärkungsfasern, beispielsweise um Glas-, Carbon- oder Aramidfasern handeln, es kann sich aber auch um ein Faserbündel, ein Roving, handeln. Die Fasern 20 werden zur Bildung der Grundstruktur kraftflussgerecht kontinuierlich abgelegt. Fig. 1 bis 4 zeigen Ausschnitte von kontinuierlich abgelegten Strangprofilen.

Alle Bauteile weisen gemäß der gestrichelten Pfeile a abgelegte Längsfasern auf, gemäß der gestrichelten Pfeile b abgelegte Querfasem und gemäß der gestrichelten Pfeile c um +/- 45° zu den Längs- und Querfasem versetzte Fasern auf. Je nach dem zu bildenden Bauteil können die Fasern 20 auch in anderer Relation zueinander abgelegt werden.

Die dargestellten Bauteile werden in Bezug auf die Längsrichtung a quasi endlos hergestellt. Bereiche, die am späteren Bauteil gelocht werden sollen, die Durchlässe 30, werden beim Legen der Fasern 20 vollautomatisiert ausgespart und in einem weiteren Schritt wird eine Stabilisierungsstruktur 40 um die Durchlässe 30 herum angeordnet.

Die Stabilisierungsstruktur 40 kann ebenfalls aus einer Endlosfaser gebildet werden und beispielsweise auf die Grundstruktur um die Durchlässe 30 herum genäht werden. In den vorliegend gezeigten Beispielen besteht die Stabilisierungsstruktur 40 aus mehreren, konzentrisch um den Durchlass 30 angeordneten Ringabschnitten 42, sowie aus radial sich von dem Durchlass 30 weg erstreckenden Abschnitten 41. Diese Form verleiht dem Bereich um den Durchlass 30 eine erhöhte Festigkeit; zusätzlich sorgt das Legen der Endlosfasern der Basisstruktur 1 um den Durchlass 30 herum dafür, dass der Kraftfluss dort nicht unterbrochen wird.

Das so gebildete endlose Basistextilhalbzeug 1 wird in Form eines Strangprofils in eine Pultrusionsanlage überführt und dort kontinuierlich zum End-Bauteil verarbeitet, das heißt, mit einem aushärtbaren Kunststoff-Matrixmaterial imprägniert und aushärten gelassen. Nach der Imprägnierung mit dem Matrixmaterial beziehungsweise dessen Aushärten muss lediglich noch das Harzmaterial aus den.Durchlässen 30 entfernt werden, wobei die Fasern unbeschädigt bleiben. Ablängen des Strangprofils führt zu den Abschnitten, die Karosseriemodulsegmente 1 bilden.

Figuren 1 und 2 zeigen ein Textilhalbzeug 1 in verschiedenen Verarbeitungsgraden.

Während in Fig. 1 die Grundstruktur mit den aufgebrachten Stabilisierungsstrukturen 4 noch ein flächiges Gebilde darstellt, sind in Fig. 2 die seitlichen Randabschnitte, parallel zur Längsrichtung, zu einem Vierkantprofil umgeformt. Beide Grundstrukturen sind als Segmente geeignet. In der flächigen Grundstruktur aus Fig. 1 liegen die Durchlässe 30 in der Ebene und eignen sich somit beispielsweise zum Aufschrauben auf ein strebenartiges Knotenelement. Die umgekantete Grundstruktur aus Fig. 2 stellt mit den parallel zur Legeebene liegenden Durchlässen 30 eine alternative Verbindungsvariante bereit. Bei der gebildeten Grundstruktur, die hier schon ein Segment 1 bildet, kann es sich auch um ein rohrförmiges Profil, wie in Fig. 3 gezeigt, handeln, es kann aber auch ein komplex geformtes Profil realisiert werden, wie in Fig. 4 dargestellt. Solche Grundstrukturen eignen sich außer zur Bildung von Segmenten 1 auch zur Darstellung von Knotenelementen.

Generell können die so geschaffenen Segmente kraftflussgerecht in ein Werkzeug gelegt und in einem Schritt zu dem hochintegrierten Karosseriemodulbauteil eingebunden werden. Bei diesem Karosseriemodulbauteil kann es sich vorzugsweise um eine Bodenstruktur, aber auch um eine Vorbau- oder Heckstruktur der Fahrzeugkarosserie handeln. Ferner können die jeweilig geschaffenen Karosseriemodulbauteile gegebenenfalls weitere Knotenelemente aufweisen, mittels derer verschiedene Karosseriemodulbauteile entsprechend maßgenau gefügt werden können. Generell ist es denkbar, dass die einzelnen Segmente auch mittels eines Schweiß- oder Klebevorgangs direkt gefügt werden, vorteilhaft können jedoch die bereitgestellten verstärkten Durchlässe 30 genutzt werden, um die Segmente beispielsweise miteinander zu verschrauben. Eine solche Schraubverbindung kann auch durch eine zusätzliche Klebeschicht verstärkt werden. Bevorzugt jedoch werden die Segmente mittels Knotenelemente gefügt werden, die die Ausrichtung der Segmente zueinander gegebenenfalls unter Toleranzausgleich gestatten.

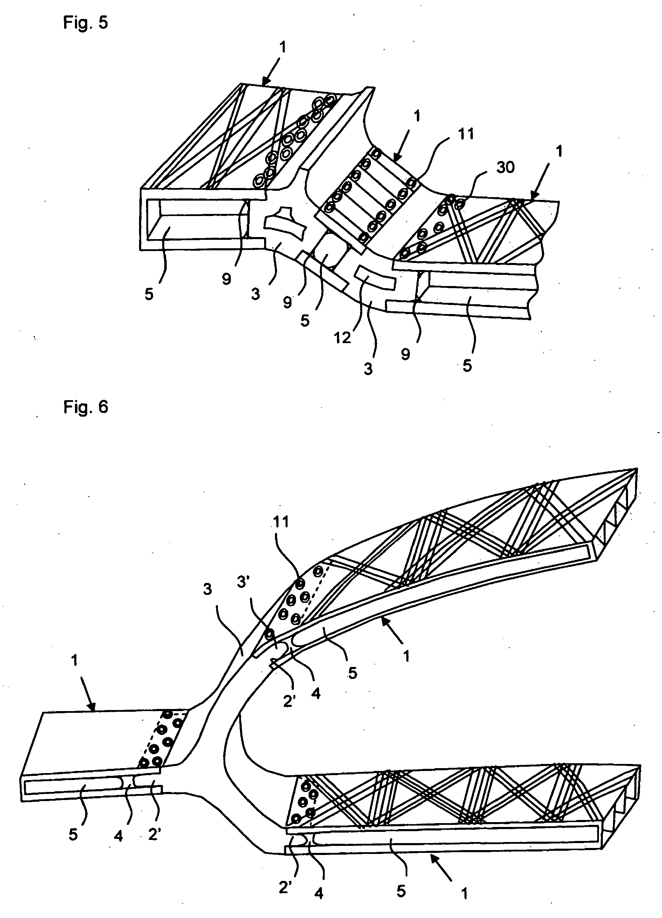

So zeigt Fig. 5 drei pultrudierte FVK-Karosseriemodulsegmente 1, von denen jeweils zwei benachbarte mittels eines Knotenelements 3 verbunden sind. Die Knotenelemente 3 lassen dabei eine beliebige, gewinkelte Anordnung der verschiedenen geometrisch einfach geformten FVK-Pultrudate 1 zueinander zu, und können daher auch selbst in ihrer Ausgestaltung unterschiedlich ausgeführt sein und beispielsweise zur Gewichtseinsparung Hohlräume 12 oder Stege 13 zur Anbindung weiterer Strukturen aufweisen. An den Kontaktstellen zwischen den jeweiligen Segmenten 1 und den Knoten 3 ist eine Kleberaupe 9 vorgesehen. Auch ist zur Sicherung der Verbindung hier eine Verschraubung 11 im Fügebereich vorgesehen.

Fig. 6 zeigt einen Ausschnitt eines Modulbauteils, bei dem drei Segmente 1 mittels eines Knotenelements 3 verbunden sind. Hier findet der Formschluss zwischen den jeweiligen FVK-Pultrudatsegmenten 1 und dem Knotenelement 3 über einen sich von dem Knotenelement 3 erstreckenden zapfenförmigen Abschnitt 3' statt, der sich in eine durch die Innenwandung 2' begrenzte Ausnehmung des jeweiligen Segments 1 erstreckt. Hier kann zur Begrenzung der des Hohlraumabschnitts, in den der Knoten 3 mit dem zapfenförmigen Abschnitt 3' eindringt, in dem FVK-Pultrudat 1 eine Gussbarriere 4, die auch aus Klebstoff sein kann, vorgesehen sein.

Das Faserverbund-Kunststoff-Pultrudat der Segmente 1 kann, wie gezeigt, mit 0°, 90° und ± 45° abgelegte Fasern aufweisen, während um die Durchtrittsöffnungen 30, in denen Schrauben 11 angeordnet werden können, die radialen und umfänglich konzentrischen Faserverstärkungsstrukturen 40 vorgesehen sind.

Das Knotenelement kann, wie oben erwährt, aus einer Aluminium- oder Magnesium-Legierung gegossen sein, es kann sich aber auch um einen RTM-Knoten handeln. Dabei wird das Gussmaterial aus einem spritzgießfähigen Verstärkungsfaser-Matrix-Kunststoffgemisch gebildet.

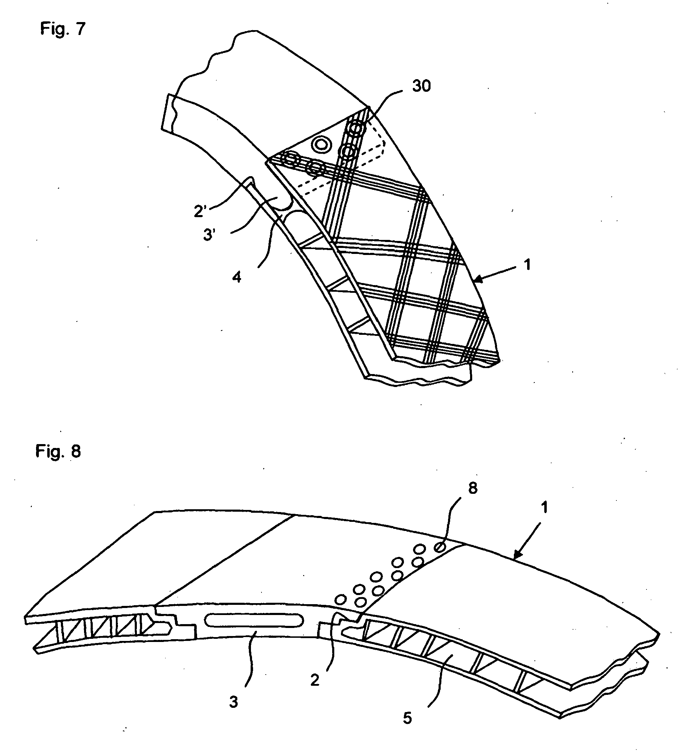

Fig. 7 zeigt wie Fig. 6 ein Knotenelement 3, das nicht um ein Verbindungsende des FVK-Pultrudats 1 herum gegossen ist, sondern einen Zapfen 3' bildend sich in eine durch die Innenwandung 2' begrenzte Ausnehmung des FVK-Pultrudats 1 hinein erstreckt. Diese Ausnehmung kann wieder durch eine Gussbarriere 4 begrenzt sein. Um die Verbindung zwischen dem FVK-Pultrudat-Segment 1 und dem Knoten 3 zu sichern, weisen sowohl das Segment 1 als auch das Knotenelement 3 korrespondierende Durchtrittsöffnungen 8,30 auf, in die sich Verbindungsmittel wie Stifte bzw. Schrauben einführen lassen. Die Durchtrittsöffnungen 30 am Segment 1 sind wieder mit den radial und konzentrisch um die Durchtrittsöffnung 30 angeordneten Verstärkungsstrukturen versehen, die eine Unterbrechung des Kraftflusses im Segment 1 unterbinden und den Bereich der Durchtrittsöffnungen 30 verstärken.

Fig. 8 zeigt eine weitere alternative Fügelinie zwischen Knotenelement 3 und FVK-Segment 1, hier stellt sich die Verbindungswandung 2 stufenförmig dar. Auch hier sind Durchtrittsöffnungen 8 im Knotenelement 3 und hier nicht zu sehende Durchtrittsöffnungen im pultrudierten FVK-Segment 1 vorgesehen, um die Verbindung zu sichern. Generell ist es auch denkbar, dass der Kontaktbereich zwischen Knotenelement 3 und der Wandung 2 des FVK-Segments 1 entlang der Fügelinie mit einem Klebstoff versehen wird.

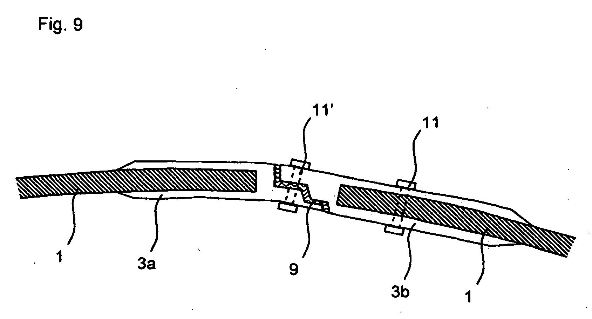

Fig. 9 zeigt eine Verbindung zweier pultrudierter FVK-Segmente 1 über ein zweiteiliges Knotenelement 3 bestehend aus den Knotenabschnitten 3a und 3b, die eine miteinander korrespondierende, hier stufenförmige Fügelinie aufweisen. Die jeweiligen Knotenabschnitte 3a,3b können separat mit den Verbindungsenden der Segmente 1 verbunden, werden, so dass in einem nachfolgenden Fügeschritt, die mit den Knotenabschnitten 3a,3b ausgestatteten Segmente 1 einfach zusammengesetzt werden können. Die Verbindung der Knotenabschnitte 3a,3b an den Segmenten 1 wird durch Schrauben 11 geschaffen, die durch die vorgesehenen Durchlässe im Segment und entsprechend eingebrachte Öffnungen im dem Knotenabschnitte 3a,3b geführt werden. Die Knotenabschnitte 3a,3b können auch an den Segmenten 1 angegossen sein. Eine weitere Schraube 11' verbindet die Knotenabschnitte 3a,3b miteinander, an der Fügelinie kann ferner zusätzlich eine Klebstoffschicht 9 vorgesehen sein.

In einer bevorzugten Ausgestaltung wird ein dreidimensional geformtes Karosseriemodulbauteil, das aus einer Mehrzahl von Karosseriemodulsegmenten (1) zusammengesetzt. Dabei sind die Karosseriemodulsegmente (1) Abschnitte kontinuierlich pultrudierter Faser-Kunststoffverbund-Pultrudate, wobei jedes Pultrudat eine Grundstruktur aufweist, die aus in Bezug auf eine vorgegebene Geometrie des Bauteils kraftflussgerecht abgelegten Endlosfasern (20) besteht. Die Grundstruktur weist zumindest einen Durchlass (30) pro Karosseriemodulsegment (1) zur Aufnahme eines Verbindungsmittels (11) auf, um zumindest zwei der Karosseriemodulsegmente (1) zu verbinden, wobei um den Durchlass (30) die kraftflussgerecht abgelegten Fasern (20) herum gelegt sind, und eine Stabilisierungsstruktur (40) aus Fasern angeordnet ist. Das Karosseriemodulbauteil weist zumindest ein Knotenelement (3) auf, über das die zumindest zwei Karosseriemodulsegmente (1) verbunden sind, wobei das Knotenelement (3) Durchtrittsöffnungen (8) für die Verbindungsmittel (11) aufweist, die mit den Durchlässen (30) der Karosseriemodulsegmente (1) korrespondieren. Die Faser-Kunststoffverbund-Pultrudate stellen jeweils flache oder nur gering gekrümmte Flächensegmente dar. Bevorzugt bildet das Karosseriemodulbauteil einen Kraftfahrzeugboden oder weitere Flächenbauteile eines Kraftfahrzeugs, wie beispielsweise Türen, Klappen oder Dächer.

Die Karosseriemodulbauteile der Figuren 5 bis 9 werden aus den belastungsgerechten, verschnittfreien dreidimensional geformten Basisstrukturen 1 nach weiterer Verarbeitung im Pultrusionsverfahren geschaffen, wodurch Fasergehalte bis zu 70 Vol.-% und entsprechend hohe E-Module der Segmente möglich sind. Die komplexen Leichtbaukarosseriemodule sind dabei vorzugsweise aus den belastungsgerechten FVK-Pultrudatsegmenten und den verbindenden Knotenelementen aus Metall oder aus einem Faserverbundkunststoff geschaffen.

Das erfindungsgemäße Karosseriemodulbauteil besteht aus mehreren, zumindest jedoch aus zwei Karosseriemodulsegmenten und vorzugsweise wenigstens einem gegossenen Knotenelement. Bei den verwendeten Halbzeug-Segmenten handelt es sich um ein Faser-Kunststoffverbund-Pultrudat, das durch ein innen liegendes Hohlvolumen und durch die kraftflussgerechte Anordnung der Verstärkungsfasern insbesondere der angestrebten Leichtbauweise eines Kraftfahrzeugs entspricht.

Die bereitgestellten pultrudierten FVK-Segmente können erfindungsgemäß in einer Ausführungsform wirtschaftlich durch direktes Eingießen der FVK-Segmente in den Knoten in exakter Positionierung zueinander unter Ausgleich von Bauteilverzügen gefügt werden. Das Gussverfahren gewährleistet die korrekte Krafteinleitung und Kraftübertragung. Durch den sehr hohen Fasergehalt der Pultrusionprofile lassen sich mittels dieser vereinfachten Fügetechnik unter maximaler Werkstoffausnutzung und bei konsequentem Leichtbau belastungsgerechte Strukturen realisieren.

So kann ein Karosseriemodulbauteil aus zwei oder mehreren Segmenten bestehen, die mittels eines gegossenen Knotenelements verbunden sind. Die Segmente bestehen aus dem Faser-Kunststoffverbund-Pultrudat, und weisen zumindest ein innen liegendes Hohlvolumen auf. Das Knotenelement wird an zumindest einer Wandung eines Verbindungsendes jedes der zu verbindenden Segmente formschlüssig angegossen, während die Segmente außerhalb des Knotenelements frei von Gussmaterial sind. Der wesentliche Anteil des Kraftfahrzeugstrukturbauteils wird also durch die FVK-Bauteile gebildet, die einfach über einen an ihren Verbindungsenden angegossenen Knoten gefügt sind.

Soweit das Knotenelement (3) ein gegossenes Knotenelement (3) ist, können die Verbindungsmittel (11) in bevorzugter Weise mit dem Knotenelement (3) zusammen, beziehungsweise einteilig gegossen werden. Knotenelement und Verbindungsstift werden somit in demselben Prozessschritt als eineinteiliges Bauteil gegossen. So ist es beispielsweise möglich mehrere Karosseriemodulsegmente (1) gleichzeitig über das Angießen eines Knotenelements, insbesondere aus Aluminium- oder Magnesiumlegierung zu verbinden, indem die Durchlässe (30) mit dem Material des Knotenelements ausgegossen werden. Der Verfahrensschritt zur Aufnahme der Verbindungsmittel (11) ist somit in das Angießen des Kontenelements integriert.

So können die Vorteile des sehr hohen Fasergehalts und der belastungsgerechten Strukturen der FVK-Bauteile durch Verbindung über einen kostengünstigen Gussknoten unter Ausgleich von Bauteiltoleranzen und Beibehaltung der richtigen Krafteinleitung und Kraftübertragung bei der Herstellung von Kraftfahrzeugstrukturbauteilen genützt werden und erlauben eine Optimierung von Kosten und Leichtbau.

Das angegossene Knotenelement kann dabei in einen Hohlraumabschnitt eindringen, der an den Verbindungsenden der Segmente vorliegt, alternativ oder zusätzlich kann das Knotenelement eine Außenwandung der Verbindungsenden der Halbzeug-Bauteile umschließen, beziehungsweise dort zur Anlage kommen.

Ferner ist vorgesehen, dass das Knotenelement und die Segmente Durchtrittsöffnungen für Verbindungsstifte aufweisen. Das Knotenelement hat die Durchtrittsöffnungen in dem Bereich, in dem es an den Verbindungsenden der Segmente zur Anlage kommt; entsprechend liegen die Durchtrittsöffnungen der Segmente auch an den Verbindungsenden vor und sind mit den Durchtrittsöffnungen des Knotenelements kongruent. Allerdings können auch weitere Durchtrittsöffnung für andere Zwecke an Segmenten und/oder Knoten bereitgestellt sein.

Zudem kann in einem Bereich, in dem das Knotenelement an die Wandung eines Verbindungsendes angrenzt, eine Kleberaupe vorliegen.

Wird das Knotenelement aus einem Gussmaterial gebildet, so werden zunächst die zu verbindenden Segmente positionsgenau in eine Gussform eingelegt. Es wird dabei jeweils das Verbindungsende der zu verbindenden Segmente derart in Bezug zu einer Kavität der Gussform eingelegt, dass das Verbindungsende wenigstens an die Kavität angrenzt. Die Kavität dient zur Ausbildung der Form des Knotenelements.

Hierauf folgt das Schließen der Gussform und das Einbringen des Gussmaterials in die Kavität, wobei eine oder mehrere Wandungen des Verbindungsendes der entsprechenden Segmente mit dem Gussmaterial angegossen werden. Durch erstarren Lassen des Gussmaterials zur Ausbildung des Knotenelements bildet sich ein Formschluss zwischen der Wandung der jeweiligen Verbindungsenden und dem Knotenelement. Das erfindungsgemäße Verbindungsverfahren des direkten Angießens einer Knotenstruktur an die FVK-Strukturen senkt die Anzahl der benötigten Werkzeuge sowie die Anzahl der Fertigungsschritte bei der Herstellung komplexer Kraftfahrzeug-Strukturbauteile deutlich. Zudem kann eine auf das Bauteil ausgeübte Kraft besser in die Struktur eingeleitet und weiter übertragen werden und somit der Werkstoff besser ausgenutzt werden.

Alternativ zum Angießen können sich die Verbindungsenden der zu Segmente in die Kavität der Gussform hinein erstrecken, so dass das gebildete Knotenelement die Verbindungsenden der zu verbindenden Segmente umschließt. Bei dem Gussmaterial kann es sich um eine Leichtmetall-Legierung wie beispielsweise eine Aluminium- oder Magnesium-Legierung handeln, es ist aber auch ein spritzgießfähiges Verstärkungsfaser-Matrix-Kunststoffgemisch denkbar.

In einer Verfahrensvariante, in der das innen liegende Hohlvolumen des Segments am Verbindungsende offen liegt, so dass das Segment so in oder an der Kavität angeordnet ist, dass das Hohlvolumen in die Kavität mündet und so einen Strömungspfad für das Gussmaterial bereitstellt, wird vor dem Schritt des positionsgenauen Einlegens des Segments eine Gussbarriere in das Hohlvolumen eingebracht, die nahe dem Verbindungsende angeordnet wird und damit ein weiteres Eindringen des Gussmaterials in das Hohlvolumen verhindert. Das Guss-Knotenelement bleibt somit auf den Bereich der Verbindungsenden beschränkt. Dort kann ein massiver Abschnitt ausgebildet werden.

Ferner ist vorgesehen, dass vor dem Einbringen des Gussmaterials in die Kavität eine Fasern aufweisende Preform in der Kavität angeordnet wird. Bei den Fasern kann es sich um Metall-Fasern, Carbon-Fasern, Glasfasern und/oder Textil- insbesondere AramidFasern handeln. Dabei kommt zumindest eine der Wandungen der Verbindungsenden der zu verbindenden Segmente an der Preform zur Anlage, die im nachfolgenden Schritt beim Einbringen des Gussmaterials von dem Gussmaterial durchdrungen und/oder umgossen wird. Bei dieser Preform kann es sich um eine einen Formkern, insbesondere um eine einen Sandkern umgebende Faser-Preform handeln. Durch die Preform, die Verstärkungsfasern aufweist, wird das Knotenelement verstärkt.

Auch ohne die Verwendung einer Faser aufweisenden Preform ist es denkbar, dass vor dem Einbringen des Gussmaterials in die Kavität ein Formkern wie etwa ein Sandkern in die Kavität eingebracht wird, um das dort auszubildende Knotenelemente mit einem innen liegenden Hohlraum auszustatten, um weiter dem Leichtbaugedanken Rechnung zu tragen.

Schließlich kann vorgesehen sein, dass an dem Verbindungsende des Segments Dämme an einer Innenwandung bereitgestellt sind, während die Kavität der Gussform derart ausgebildet ist, dass Distanzhalter ausgeformt werden, die eine Form aufweisen, um zwischen zwei Dämmen aufgenommen zu werden, wobei zwischen den Dämmen, in denen kein Distanzhalter aufgenommen wird, Kleberaupen eingebracht werden.

Ferner ist es denkbar, dass das Knotenelement eine Faserverstärkung umfasst, die ebenfalls ein Faser-Verbund-Kunststoffpultrudat mit Faserrichtungen in 0°, 90°, ± 45°, ± 60° etc. quasiisotrop aufweist. Dort können selbstverständlich auch Lochverstärkungen, radial und konzentrisch kreisförmig um die Durchtrittsöffnungen vorgesehen sein. Diese Preform wird zusammen mit den pultrudierten Segmenten in die Kavität der Gussform eingelegt und durch ein Gussmaterial auf die beschriebene Weise umgossen.

Zur Bildung der Durchtrittsöffnungen im gegossenen Knotenelement können eingegossene Inserts verwendet werden. Dabei kann es sich beispielsweise um Hülsen oder Innengewinde handeln, die beispielsweise aus Metall ausgebildet sind. Damit wird sicher gestellt, dass der Knoten, der einen Formschluss mit den Halbzeugen bildet, zusätzlich an dem Segment befestigt werden kann, so dass das gebildete Karosseriemodul im Knotenbereich die gewünschte Stabilität aufweist.

Generell ist nicht ausgeschlossen, dass die zur Verbindung der Segmente vorgesehenen Knotenelemente zunächst zu einer Rahmenstruktur des Karosseriemodulbauteils gefügt werden, und im nächsten Schritt die Segmente mittels der dort vorliegenden Durchlässe mit dem Rahmen verschraubt oder vernietet werden. Die Knotenelemente zur Bildung einer solchen Rahmenstruktur können etwa aus einer Leichtmetalllegierung gegossen sein, es kann sich bei den Knotenelementen aber auch um pultrudierte FVK-Strukturen handeln, die wie Fig. 3 und 4 zeigen, auch ein rohrartiges oder mehrkantiges Profil bilden können, das in geeigneter Weise abgelängt und zur Rahmenstruktur gefügt wird. Entsprechend den pultrudierten Segmenten können auch pultrudierte Knotenelemente mit faserverstärkten Durchlässen ausgestattet sein.

Damit stellt der erfindungsgemäße Gegenstand ein wirtschaftlich gefügtes Karosseriemodulbauteil aus Faserverbundkunststoff-Strukturen bereit, das dem Leichtbaugedanken genügt und dennoch eine korrekter Krafteinleitung und Kraftübertragung ermöglicht.

## Patentansprüche

1. Dreidimensional geformtes Karosseriemodulbauteil, das aus einer Mehrzahl von Karosseriemodulsegmenten (1) zusammengesetzt ist, welche Abschnitte kontinuierlich pultrudierter Faser-Kunststoffverbund-Pultrudate sind,
**dadurch gekennzeichnet, dass**
jedes Pultrudat eine Grundstruktur aufweist, die aus in Bezug auf eine vorgegebene Geometrie des Bauteils kraftflussgerecht abgelegten Endlosfasern (20) besteht, und wobei die Grundstruktur zumindest einen Durchlass (30) pro Karosseriemodulsegment (1) zur Aufnahme eines Verbindungsmittels (11) aufweist, um zumindest zwei der Karosseriemodulsegmente (1) zu verbinden, wobei um den Durchlass (30)
- die kraftflussgerecht abgelegten Fasern (20) herum gelegt sind, und
- eine Stabilisierungsstruktur (40) aus Fasern angeordnet ist,

2. Karosseriemodulbauteil nach Anspruch 1,
**dadurch gekennzeichnet, dass**
das Karosseriemodulbauteil zumindest ein Knotenelement (3) aufweist, über das die zumindest zwei Karosseriemodulsegmente (1) verbunden sind, wobei das Knotenelement (3) Durchtrittsöffnungen (8) für die Verbindungsmittel (11) aufweist, die mit den Durchlässen (30) der Karosseriemodulsegmente (1) korrespondieren.

3. Karosseriemodulbauteil nach Anspruch 2,
**dadurch gekennzeichnet, dass**
das Karosseriemodulsegment (1) zumindest ein innen liegendes Hohlvolumen (5) aufweist, wobei an Verbindungsenden der Karosseriemodulsegmente (1) Hohlraumabschnitte vorliegen, und wobei das Knotenelement (3) in den Hohlraumabschnitten und/oder an einer Wandung (2,2') der Verbindungsenden der Segmente (1) zur Anlage kommt.

4. Karosseriemodulbauteil nach Anspruch 2 oder 3,
**dadurch gekennzeichnet, dass**
das Knotenelement (3) aus einem Metallmaterial, insbesondere einem Leichtmetallmaterial, oder aus einem Faser-Kunststoffverbundmaterial, insbesondere einem pultrudierten Faser-Kunststoffverbundmaterial besteht.

5. Karosseriemodulbauteil nach Anspruch 4,
**dadurch gekennzeichnet, dass**
das Knotenelement (3) ein gegossenes Knotenelement (3) ist, das an zumindest einer der Wandungen (2,2') jedes der zu verbindenden Karosseriemodulsegmente (1) formschlüssig angegossen ist,
und/oder das Knotenelement (3) ein gegossenes Knotenelement (3) ist und die Verbindungsmittel (11) mit dem Knotenelement (3) zusammen einteilig gegossen sind.

6. Karosseriemodulbauteil nach zumindest einem der Ansprüche 2 bis 5,
**dadurch gekennzeichnet, dass**
zumindest eine Kleberaupe (9) in einem Bereich zwischen dem Knotenelement (3) und der Wandung (2,2') eines der Verbindungsenden vorgesehen ist.

7. Karosseriemodulbauteil nach zumindest einem der Ansprüche 1 bis 6,
**dadurch gekennzeichnet, dass**
das Karosseriemodulsegment (1) einen Fasergehalt im Bereich von 50 % bis 75 %, bezogen auf das Gesamtvolumen des Faser-Kunststoffverbundmaterials, bevorzugt von 65 % bis 75 %, am meisten bevorzugt von 70 %, aufweist

8. Karosseriemodulbauteil nach zumindest einem der Ansprüche 1 bis 7,
**dadurch gekennzeichnet, dass**
das Karosseriemodulbauteil eine Kraftfahrzeugboden-, Vorbau- oder Heckstruktur ist.

9. Verfahren zur Herstellung eines dreidimensional geformten Karosseriemodulbauteils aus einer Mehrzahl von Karosseriemodulsegmenten nach zumindest einem der Ansprüche 1 bis 8,
umfassend die Schritte:
- kontinuierlich Pultrudieren von Faser-Kunststoffverbund-Pultrudaten und
- Ablängen der Pultrudate in die Karosseriemodulsegmente (1) bereitstellende Abschnitte, wobei jedes Pultrudat eine Grundstruktur aufweist, die aus in Bezug auf eine vorgegebene Geometrie des Bauteils kraftflussgerecht abgelegten Endlosfasern (20) besteht, dabei
- Bilden zumindest eines Durchlasses (30) pro Karosseriemodulsegment (1) in der Grundstruktur zur Aufnahme eines Verbindungsmittels (11) um zumindest zwei der Karosseriemodulsegmente (1) zu verbinden, dazu
- kraftflussgerecht Ablegen der Fasern (20) um den Durchlass (30) herum und
- Anordnen der Stabilisierungsstruktur (40) aus Fasern um den Durchlass (30), und
- Verbinden der Karosseriemodulsegmente (1) zumindest durch ein die Durchlässe (30) durchdringendes Verbindungsmittel (11).

10. Verfahren nach Anspruch 9,
umfassend die Schritte:
- Imprägnieren der Grundstruktur und der um die Durchlässe (30) angeordneten Stabilisierungsstrukturen (40) mit einem aushärtbaren Kunststoff-Matrixmaterial,
- aushärten Lassen des Matrixmaterials,
- Entfernen von Matrixmaterial aus den Durchbrüchen (30) und
- Fertigstellen des Karosseriemodulsegments (1).

11. Verfahren nach Anspruch 9 oder 10,
umfassend den Schritt:
- Verbinden der Karosseriemodulsegmente (1) mittels eines Knotenelements (3), das Durchtrittsöffnungen (8) für die Verbindungsmittel (11) aufweist, die mit den Durchlässen (30) der Karosseriemodulsegmente (1) korrespondieren.

12. Verfahren nach Anspruch 11,
umfassend die Schritte:
- Gießen des Knotenelements (3), dabei Verbinden der Karosseriemodulsegmente (1) über das Knotenelement (3) durch
a) Einlegen der zu verbindenden Karosseriemodulsegmente (1) positionsgenau in eine Gussform, wobei jeweils ein Verbindungsende der zu verbindenden Karosseriemodulsegmente (1) zumindest an eine Kavität der Gussform angrenzt, wobei die Kavität eine Form zur Ausbildung des Knotenelements (3) bereitstellt,
b) Schließen der Gussform,
c) Einbringen des Gussmaterials in die Kavität, wobei zumindest an eine Wandung (2,2') des Verbindungsendes der zu verbindenden Karosseriemodulsegmente (1) das Gussmaterial angegossen wird,
d) erstarren Lassen des Gussmaterials, wobei sich das Knotenelement (3) ausbildet und wobei ein Formschluss zwischen der Wandung (2,2') und dem Knotenelement (3) bereitgestellt wird.

13. Verfahren nach Anspruch 12,
wobei
das Gussmaterial ein Gussmaterial eine Leichtmetalllegierung, insbesondere eine Aluminium- oder Magnesiumlegierung oder ein spritzgießfähiges Verstärkungsfaser-Matrixkunststoffgemisch ist.

## Claims

1. Three-dimensionally shaped body module component composed of a plurality of body module segments (1) which are sections of continuously pultruded fibre/plastic composite pultrudates,
**characterised in that**
each pultrudate has a base structure which consists of continuous fibres (20) laid to match the power flow related to a predetermined geometry of the component, wherein the base structure has at least one opening (30) per body module segment (1) to accommodate a joining means (11) for joining at least two of the body module segments (1), wherein
- the fibres (20) laid to match the power flow are laid around the opening (30), and
- a stabilising structure (40) made of fibres is arranged around the opening (30).

2. Body module component according to claim 1,
**characterised in that**
the body module component comprises at least one node element (3), via which at least two body module segments (1) are joined, the node element (3) having through-openings (8) for the joining means (11), which correspond with the openings (30) of the body module segments (1).

3. Body module component according to claim 2,
**characterised in that**
the body module segment (1) has at least one internal hollow volume (5), wherein there are cavity sections at joining ends of the body module segments (1), and wherein the node element (3) comes into contact in the cavity sections and/or with a wall (2, 2') of the joining ends of the segments (1).

4. Body module component according to claim 2 or 3,
**characterised in that**
the node element (3) consists of a metal material, in particular a light metal material, or of a fibre/plastic composite material, in particular of a pultruded fibre/plastic composite material.

5. Body module component according to claim 4,
**characterised in that**
the node element (3) is a cast node element (3), which is positively cast onto at least one of the walls (2, 2') of each of the body module segments (1) to be connected,
and/or **in that** the node element (3) is a cast node element (3) and the joining means (11) are integrally cast with the node element (3).

6. Body module component according to one or more of claims 2 to 5,
**characterised in that**
at least one adhesive bead (9) is provided between the node element (3) and the wall (2, 2') of one of the joining ends.

7. Body module component according to one or more of claims 1 to 6,
**characterised in that**
the body module segment (1) has a fibre content in the range of 50% to 75% relative to the total volume of the fibre/plastic composite material, preferably in the range of 65% to 75% and most preferably 70%.

8. Body module component according to one or more of claims 1 to 7,
**characterised in that**
the body module component is a motor vehicle floor, front end or rear structure.

9. Method for producing a three-dimensionally shaped body module component from a plurality of body module segments according to one or more of claims 1 to 8,
comprising the steps of:
- the continuous pultruding of fibre/plastic composite pultrudates and,
- the cutting of the pultrudates into sections providing the body module segments (1), wherein each pultrudate has a base structure which consists of continuous fibres (20) laid to match the power flow related to a predetermined geometry of the component, involving
- the formation of at least one opening (30) per body module segment (1) in the base structure to accommodate a joining means (11) for joining at least two of the body module segments (1), further
- the laying of the fibres (20) in a manner to match the power flow around the opening (30), and
- the arrangement of the stabilising structure (40) of fibres around the opening (30), and
- the joining of the body module segments (1) at least by a joining means (11) penetrating the openings (30).

10. Method according to claim 9,
comprising the steps of:
- the impregnation of the base structure and of the stabilising structures (40) arranged around the openings (30) with a curable plastic matrix material,
- the curing of the matrix material,
- the removal of the matrix material from the openings (30), and
- the completion of the body module segment (1).

11. Method according to claim 9 or 10,
comprising the step of:
- the joining of the body module segments (1) by means of a node element (3) having through-openings (8) for the joining means (11) which correspond with the openings (30) of the body module segments (1)

12. Method according to claim 11,
comprising the steps of:
- the casting of the node elements (3), involving the joining of the body module segments (1) via the node element (3) by
a) placing the body module segments (1) to be joined in the correct position in a casting mould, wherein a joining end of each of the body module segments (1) to be joined adjoins at least one cavity of the casting mould, the cavity providing a mould for the formation of the node element (3),
b) closing the casting mould,
c) placing the casting material in the cavity, wherein the casting material is cast onto at least one wall (2, 2') of the joining end of the body module segments (1) to be joined,
d) letting the casting material set, wherein the node element (3) is formed and a positive connection is provided between the wall (2, 2') and the node element (3).

13. Method according to claim 12,
wherein
the casting material is a light metal alloy, in particular an aluminium or a magnesium alloy, or a reinforcement fibre/matrix plastic mixture suitable for injection moulding.

## Revendications

1. Élément modulaire de carrosserie tridimensionnel qui est constitué d'une pluralité de segments modulaires de carrosserie (1) qui sont des sections de pultrudats composites plastique/fibre pultrudés en continu, **caractérisé en ce que** chaque pultrudat présente une structure de base qui se compose, en termes d'une géométrie prédéfinie de l'élément, de fibres filaments (20) déposées en fonction des contraintes, et la structure de base présentant au moins un passage (30) pour chaque segment de modulaire de carrosserie (1) destiné à recevoir un élément de liaison (11) pour relier au moins deux des segments modulaires de carrosserie (1), les fibres (20) déposées en fonction des contraintes étant disposées autour du passage (30), et une structure de stabilisation (40) en fibres étant disposée.

2. Élément modulaire de carrosserie selon la revendication 1, **caractérisé en ce que** l'élément modulaire de carrosserie présente au moins un élément de noeud (1) qui permet de relier les au moins deux éléments modulaires de carrosserie (1), l'élément de noeud (3) présentant des ouvertures de passage (8) pour l'élément de liaison (11), qui correspondent aux passages (30) des segments modulaires de carrosserie.

3. Élément modulaire de carrosserie selon la revendication 2, **caractérisé en ce que** le segment modulaire de carrosserie (1) présente au moins un volume (5) vide intérieur, sur des extrémités de liaison des segments modulaires de carrosserie (1) étant disposées des sections de cavité, et l'élément de noeud (3) venant prendre appui dans les sections de cavité et/ou sur une paroi (2, 2') des extrémités de liaison des segments (1).

4. Élément modulaire de carrosserie selon la revendication 2 ou 3, **caractérisé en ce que** l'élément de noeud (3) est en matériau métallique, en particulier en matériau métallique léger ou en matériau composite plastique/fibre, en particulier en matériau composite plastique/fibre pultrudé.

5. Élément modulaire de carrosserie selon la revendication 4, **caractérisé par** l'élément de noeud (3) est un élément de noeud (3) coulé, qui est moulé par complémentarité de forme sur au moins l'une des parois (2, 2') de chacun des segments de module de carrosserie (1) à relier, et/ou l'élément de noeud (3) est un élément de noeud (3) coulé et l'élément de liaison (11) sont coulés ensemble avec l'élément de noeud (3) en un seul tenant.

6. Élément modulaire de carrosserie selon au moins une quelconque des revendications 2 ou 5, **caractérisé en ce qu'**au moins un cordon de colle (9) est disposé dans la zone entre l'élément de noeud (3) et la paroi (2, 2') de l'une des extrémités de liaison.

7. Élément modulaire de carrosserie selon au moins l'une des revendications 1 à 6, **caractérisé en ce que** le segment modulaire de carrosserie (1) présente une teneur en fibre dans la plage comprise entre 50 % et 75 % par rapport au volume total du matériau composite plastique/fibre, de préférence entre 65 % et 75 %, mieux encore de 70 %.

8. Élément modulaire de carrosserie selon au moins l'une quelconque des revendications 1 à 7, **caractérisé en ce que** l'élément modulaire de carrosserie est une structure arrière, d'avant-corps, de plancher.

9. Procédé de fabrication d'un élément modulaire de carrosserie tridimensionnel constitué d'une pluralité de segments modulaires de carrosserie selon au moins une quelconque des revendications 1 à 8, comprenant les étapes suivantes :
- pultruder en continu de pultrudats composites plastique/fibre et
- couper à longueur des pultrudats dans les sections fournissant les segments modulaires de carrosserie (1), chaque pultrudat présentant une structure de base qui se compose, en termes d'une géométrie prédéfinie de l'élément, de fibres filaments (20) déposées en fonction des contraintes,
- former au moins un passage (30) pour chaque segment modulaire de carrosserie (1) dans la structure de base pour la réception d'un élément de liaison (11) afin de relier au moins deux des segments modulaires de carrosserie (1), pour cela
- déposer en fonction des contraintes les fibres (20) autour du passage et
- disposer de la structure de stabilisation (40) en fibres autour du passage (30), et
- relier les segments modulaires de carrosserie (1) au moins par un élément de liaison (11) pénétrant dans les passages (30)

10. Procédé selon la revendication 9, comprenant les étapes :
- imprégner la structure de base et les structures de stabilisation (40) disposées autour des passages (30) au moyen d'un matériau matriciel plastique durcissable,
- laisser durcir le matériau matriciel,
- retirer le matériau matriciel des passages (30) et
- terminer le segment modulaire de carrosserie (1).

11. Procédé selon la revendication 9 ou la revendication 10, comprenant l'étape suivante :
- relier les éléments modulaires de carrosserie (1) au moyen d'un élément de noeud (3) qui présente des ouvertures de passage (8) pour l'élément de liaison (11) qui correspondent aux passages (30) des segments modulaires de carrosserie (1).

12. Procédé selon la revendication 11, comprenant les étapes suivantes :
- couler l'élément de noeud (3), la liaison des segments modulaires de carrosserie (1) s'effectuant au moyen de l'élément de noeud (3) par
a) insertion des segments modulaires de carrosserie (1) à relier dans une position exacte dans le moule de fonte, chacune des extrémités de liaison des segments modulaires de carrosserie (1) à relier avoisinant une cavité du moule de fonte, la cavité fournissant une forme destinée à la formation de l'élément de noeud (3).
b) fermeture du moule de fonte,
c) introduction du matériau de fonte dans la cavité, au moins sur une paroi (2, 2') de l'extrémité de liaison des segments modulaires de carrosserie (1) à relier est moulé le matériau de fonte,
d) laisser se solidifier le matériau de fonte, l'élément de noeud (3) se formant et une liaison positive étant fournie entre la paroi (2, 2') et l'élément de noeud (3).

13. Procédé selon la revendication 12, le matériau de fonte étant un matériau de fonte, un alliage en métal léger, en particulier un alliage de magnésium ou d'aluminium ou encore un mélange de plastique matriciel/fibre de renfort pouvant être moulé par injection.
